# EUROPEAN PATENT SPECIFICATION

(11) **EP 0 495 821 B1**
(45) Date of publication and mention of the grant of the patent: **03.04.1996**
(21) Application number: 90914793.6
(22) Date of filing: 21.09.1990
(51) Int. Cl.: F02M 37/00, B60K 15/077

(54) **AN ADAPTABLE FUEL SYSTEM**
ANPASSBARES BRENNSTOFFSYSTEM
SYSTEME DE CARBURANT ADAPTABLE

(30) Priority: 22.09.1989 SE 8903129
(43) Date of publication of application: 29.07.1992
(73) Proprietor: OPCON AUTOROTOR AB, S-131 60 Nacka (SE)
(72) Inventor: LINDBRANDT, Benny, S-121 46 Johanneshov (SE)
(74) Representative: Waldinger, Ake
(86) International application number: SE9000605
(87) International publication number: WO9104406

(56) References cited:
- DE-B- 1 005 321
- DE-C- 2 259 323
- US-A- 4 393 854
- PATENT ABSTRACTS OF JAPAN, Vol 11, No 310, M630, Abstract of JP 62- 96743, publ 1987-05-06 (TOYOTA MOTOR CORP).

## Description

An apparatus of this type is known from EP-A-335168 (prior art according to Article 54 (3) EPC) disclosing a control system including a lambda sensor for the adjustment of the fuel-air mixture. A lambda sensor, however, is very slow-reacting in case of change of alcohol admixture. Therefore, the control system also comprises an electric measuring chamber in which the alcohol admixture in the fuel feed line from the fuel tank to the fuel injection apparatus is measured for obtaining a rapid coarse setting of the fuel-air adjustment followed by the slower fine setting by the lambda sensor.

This makes the control system complicated and does not ensure a perfect setting until the lambda sensor becomes active. The object of the invention is to bring about a fuel system which without complicating, additional control devices permits a change from one type of fuel to another, and that this can be performed with the engine running. The control system of the engine, therefore, shall always be able to have the engine adjusted such that it can be started up independently of if the tank is filled up with a completely new fuel compared to the fuel used when the engine was stopped. Therefore, the idea of the invention is among other things, that when the engine has been stopped by some reason and put to rest during a shorter or longer time period, the renewed start or starting up of the engine should be performed with the same type of fuel as used when the engine was stopped. This implies for instance that, after driving on 100 % petrol until the tank is empty and a following filling up with 100 % alcohol, the engine can be started and the change to driving by 100 % alcohol can be done gradually.

In order to achieve the above-mentioned object the invention has obtained the characteristic features set forth in the following claims.

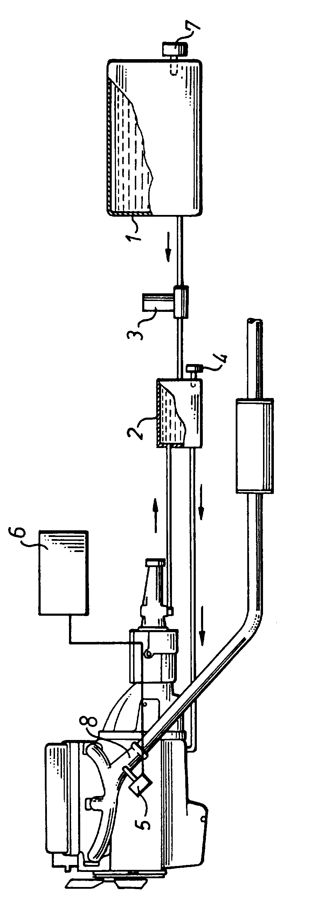

A presumed embodiment of the invention will now be described with reference to the accompanying drawing. This shows schematically a combustion engine with the new fuel supply system.

Referring to the drawing there consequently is a fuel tank I which accordingly consists of a normal fuel tank in the vehicle. From the fuel tank the fuel is fed to a slave storage 2 and the feeding can be done by a pump 3. In the slave storage 2 there is a liquid level control 4 and its purpose is to secure that a certain minimal liquid level is maintained in the slave storage tank. Accordingly, when the engine consumes fuel from the slave storage so that the level is lowered beneath the predetermined liquid level, the liquid level control 4 makes the fuel pump 3 to feed more fuel.

From the slave storage tank the fuel is led in a pipe to the combustion engine which has a not shown injection system for supplying the fuel to the engine's combustion space. Redundant fuel which is not used in the injection system is returned to the slave storage tank 2.

The engine injection system is controlled by an electronic control device 6 of a kind known per se and the signals to the electronic control device concerning the fuel's mixture ratio are received from a lambda sond 5 placed at the engine's exhaust pipe 8. The wide range lambda sond 5 accordingly indicates the composition of the combustion gases and delivers a signal to the electronic control device 6 which then regulates the ratio for the fuel-air mixture, that is fed to the engine by the injection system. With this system the electronic system manages to adjust the amount of fuel in order to always maintain the correct fuel-air ratio. This also means that the need of a special fuel sond is eliminated, which makes the system less expensive and more reliable than what is the case up till now. There is also possible to arrange the electronic control device in a way so that a special cold start system is controlled. Furthermore, in the main tank, a liquid level indicator 7 is placed in order to give the driver an indication that the fuel tank is empty, which prevents a totally emptying of the fuel system.

As said before the invention consequently offers the possibility of the engine being driven by a certain type of fuel which is in the fuel tank for a certain period of time under optimal adjustment of the injection system. With the assistance by the electronic control device 6, and after that the fuel tank is filled with another type of fuel so that the total mixture in the fuel tank becomes different than what the electronic control device is adjusted to, the slave storage tank ensures that when you again start the engine you can drive the engine with the adjustment of the injection system which the electronic control device made before the tank was filled up. Consequently by this, a reliable starting up is ensured and also is ensured a reliable driving condition for a certain time until the electronic control device manages to respond to the new fuel mixture and to adjust the injection system of the engine.

In the showed embodiment the slave storage tank is accomplished in the shape of a separate tank. As an alternative the slave storage tank can be arranged inside the fuel tank by e.g. compartmentilization with or without a controlled natural slope from the fuel tank to the slave storage tank. Above it has been emphasized that a certain smallest volume of fuel always shall be in the slave storage tank. In practice this may mean that the slave storage tank during operation is completely filled.

## Claims

1. Fuel supply apparatus for a combustion engine, which is driven by different types of fuel, and which apparatus comprises a main fuel tank (1) for the different types of fuel, and a control system (5,6) including a lambda sensor (5) in the exhaust pipe (8) feeding a signal to the control system (5,6) for the adjustment of the fuel-air mixture to the engine, **characterized** in that a slave storage tank (2) is interconnected between the main fuel tank (1) and the injection system of the engine, which slave storage tank (2) is provided with a fuel level indicating means (4) controling a fuel supply pump (3) for maintaining a minimum fuel level in the slave storage tank (2), so that when a new, different kind of fuel is fed from the main fuel tank (1) to the slave storage tank (2) this new fuel is gradually mixed with the existing fuel in the slave storage tank (2).

2. Apparatus according to claim 1, **characterized** in that a return pipe is connected from the injection system of the engine to the slave storage tank (2) for returning redundant fuel not consumed by the engine.

3. Apparatus according to claim 1 or 2, **characterized** in that a means (7) is arranged to initiate stopping of the engine when the main fuel tank (1) is empty.

## Patentansprüche

1. Kraftstoff-Zufuhreinrichtung für eine Verbrennungskraftmaschine, die mit verschiedenen Kraftstoffarten betrieben wird und einen Hauptkraftstofftank (1) für die verschiedenen Arten von Kraftstoff sowie ein Steuersystem (5, 6) mit einer Lambda-Sonde (5) im Abgasrohr (8) aufweist, die ein Signal zur Einstellung des Kraftstoff/Luftgemisches an das Steuersystem (5, 6) liefert, **dadurch gekennzeichnet**, daß zwischen dem Hauptkraftstofftank (1) und der Einspritzanlage der Maschine ein Neben-Vorratstank (2) geschaltet ist, der mit Mitteln (4) zur Anzeige des Kraftstoffniveaus versehen ist, die eine Kraftstoff-Versorgungspumpe (3) zur Aufrechterhaltung eines Mindestkraftstoffniveaus im Neben-Vorratstank (2) steuern, so daß, falls eine neue, unterschiedliche Art von Kraftstoff aus dem Hauptkraftstofftank (1) in den Neben-Vorratstank (2) geleitet wird, dieser neue Kraftstoff mit dem in dem Neben-Vorratstank (2) vorhandenen Kraftstoff allmählich vermischt wird.

2. Einrichtung nach Anspruch 1, **dadurch gekennzeichnet**, daß die Einspritzanlage der Maschine mit dem Neben-Vorratstank (2) durch eine Rückführleitung zum Zurückführen überschüssigen Kraftstoffs verbunden ist, der von der Maschine nicht verbraucht wurde.

3. Einrichtung nach Anspruch 1 oder 2, **dadurch gekennzeichnet**, daß Mittel (7) zum Veranlassen des Anhaltens der Maschine, wenn der Haupt-Kraftstofftank (1) leer ist, vorgesehen sind.

## Revendications

1. Dispositif d'amenée de carburant pour un moteur à combustion fonctionnant avec différents types de carburant, ce dispositif comprenant un réservoir de carburant principal (1) pour les différents types de carburant, et un système de commande (5, 6) comprenant un capteur lambda (5) dans le tuyau d'échappement (8), envoyant un signal au système de commande (5, 6) pour le réglage du mélange air-carburant destiné au moteur, caractérisé en ce qu'un réservoir de stockage auxiliaire (2) est interconnecté entre le réservoir de carburant principal (1) et le système d'injection du moteur, ce réservoir de stockage auxiliaire (2) étant pourvu d'un moyen d'indication de niveau de carburant (4) commandant une pompe d'amenée de carburant (3) pour maintenir un niveau de carburant minimal dans le réservoir de stockage auxiliaire (2), de manière que, lorsqu'un nouveau type différent de carburant est envoyé du réservoir de carburant principal (1) au réservoir de stockage auxiliaire (2), ce nouveau carburant soit progressivement mélangé au carburant présent dans le réservoir de stockage auxiliaire (2).

2. Dispositif selon la revendication 1, caractérisé en ce qu'un tuyau de retour est connecté entre le système d'injection du moteur et le réservoir de stockage auxiliaire (2) pour ramener du carburant en excédent, non consommé par le moteur.

3. Dispositif selon la revendication 1 ou 2, caractérisé en ce qu'un moyen (7) est prévu pour déclencher l'arrêt du moteur, lorsque le réservoir de carburant principal (1) est vide.
